Europäisches Patentamt

European Patent Office

Office européen des brevets

(11) Veröffentlichungsnummer: **0 140 193**
**B1**

## EUROPÄISCHE PATENTSCHRIFT

(45) Veröffentlichungstag der Patentschrift:
08.06.88

(51) Int. Cl.⁴: **G 11 B 5/012,** G 11 B 23/50

(21) Anmeldenummer: **84111772.4**

(22) Anmeldetag: **02.10.84**

(54) **Festplattenlaufwerk.**

(30) Priorität: **18.10.83 DE 3337845**

(43) Veröffentlichungstag der Anmeldung:
**08.05.85 Patentblatt 85/19**

(45) Bekanntmachung des Hinweises auf die Patenterteilung:
**08.06.88 Patentblatt 88/23**

(84) Benannte Vertragsstaaten:
**DE FR GB IT NL**

(56) Entgegenhaltungen:
**DE-A-2 732 432**
**DE-B-1 912 272**
**DE-B-2 142 430**
**DE-B-2 247 930**
**GB-A-1 293 776**

(73) Patentinhaber: **Nixdorf Computer Aktiengesellschaft, Fürstenallee 7, D-4790 Paderborn (DE)**

(72) Erfinder: **Bogdanski, Michael, Schwarzrietweg 22, D-4796 Salzkotten (DE)**

(74) Vertreter: **Patentanwälte Schaumburg & Thoenes, Mauerkircherstrasse 31 Postfach 86 07 48, D-8000 München 80 (DE)**

EP 0 140 193 B1

LIBER, STOCKHOLM 1988

## Beschreibung

Die Erfindung betrifft ein Festplattenlaufwerk nach dem Oberbegriff des Anspruchs 1.

Bei einem derartigen Festplattenlaufwerk, wie es beispielsweise aus der DE-A1-2 732 432 bekannt ist, sind die Magnetplatte oder ein Plattenstapel, die Trägeranordnung für die Schreib-/Leseköpfe, der Positionierantrieb und gegebenenfalls auch der Plattenantrieb in dem Gehäuse vollständig eingekapselt, um das Eindringen von Verunreinigungen in das Plattenlaufwerk zu verhindern. Das bedeutet, daß der Benutzer des Plattenlaufwerkes die Magnetplatten nicht entnehmen kann. Im Falle einer Reparatur an dem Festplattenlaufwerk muß dieses als Ganzes dem Hersteller oder dem Reparaturbetrieb übersandt werden, wobei zwangsläufig die Magnetplatten dem Hersteller oder dem Reparaturbetrieb ausgehändigt werden müssen. Da die häufigsten Defekte an den Plattenlaufwerken gerade die am Plattenlaufwerk angeordneten elektronischen Bauteile betreffen, hat der Benutzer dabei häufig nicht mehr die Möglichkeit, die auf den Magnetplatten gespeicherten Informationen auf dem normalen Wege mit Hilfe der Schreib-/Leseköpfe zu beeinflussen. Damit besteht aber die Gefahr, daß Unbefugte bei oder nach der Reparatur des Plattenlaufwerkes die auf den Magnetplatten gespeicherten Informationen lesen können.

Der Erfindung liegt die Aufgabe zugrunde, bei einem Festplattenlaufwerk der vorstehend diskutierten Art sicherzustellen, daß auch im Falle eines Defektes des Plattenlaufwerkes noch die Möglichkeit besteht, Unbefugte am Zugriff zu den auf der Magnetplatte gespeicherten Informationen zu hindern.

Diese Aufgabe wird durch die im Anspruch 1 angegebenen Merkmale gelöst.

Aus der DE-B2-1 912 272 und der GB-A-1 293 776 ist es zwar bereits bekannt, bei einem Aufzeichnungs- und Wiedergabegerät mit einem Aufzeichnungsträger in Form einer Magnetplatte die Löschfunktion von der Schreib-/Lesefunktion zu trennen und einem eigenen Löschkopf zu übertragen. Jedoch ist in diesen Schriften weder die nur bei Festplattenlaufwerken der eingangs genannten Art auftretende Aufgabe angesprochen noch ist diesen Schriften zu entnehmen, daß die Löschköpfe auch dann noch betätigbar sind, wenn die Schreib-/Lesevorrichtung nicht mehr betriebsbereit sein sollte.

Gemäß einem ersten Ausführungsbeispiel ist der Löschkopf an einem relativ zur Magnetplatte verstellbaren Löscharm angeordnet. Ein elektromagnetischer Löschkopf könnte theoretisch auch in einer festen Stellung relativ zur Magnetplatte verbleiben, da er erst durch Bestromen wirksam wird. Da jedoch durch den Löschkopf und den Löscharm die Luftströmungsverhältnisse im Plattenbereich gestört werden, ist es zweckmäßig, wenn der Löschkopf im Normalbetrieb aus dem Plattenbereich herausgeführt werden kann. Zweckmäßigerweise ist der Löscharm am Gehäuse um eine parallel zur Magnetplattenachse gerichtete Schwenkachse schwenkbar gelagert. Der Löscharm kann dabei manuell oder motorisch verstellbar sein.

Bei einem Laufwerk mit einem eine Mehrzahl von Magnetplatten umfassenden Plattenstapel sind die Löschköpfe zwischen die Magnetplatten einschwenkbar, wobei pro Plattenoberfläche ein Löschkopf vorgesehen ist. Bei einer Mehrzahl von Magnetplatten kann die Anordnung auch so getroffen sein, daß nur einem Teil der Plattenoberflächen jeweils ein Löschkopf zugeordnet ist. Dies bietet die Möglichkeit, beispielsweise auf einer oder zwei Plattenoberflächen des Stapels Serviceinformationen zu speichern, die für einen Testlauf des Plattenlaufwerkes erforderlich sind und daher nicht gelöscht werden sollten. Die Anordnung kann aber auch so getroffen werden, daß sich der Löschkopf in seiner Löschstellung nur über einen Teil der Magnetplattenoberfläche erstreckt, so daß die angesprochenen Serviceinformationen auf dem vom Löschkopf nicht erfaßten Plattenbereich gespeichert werden können.

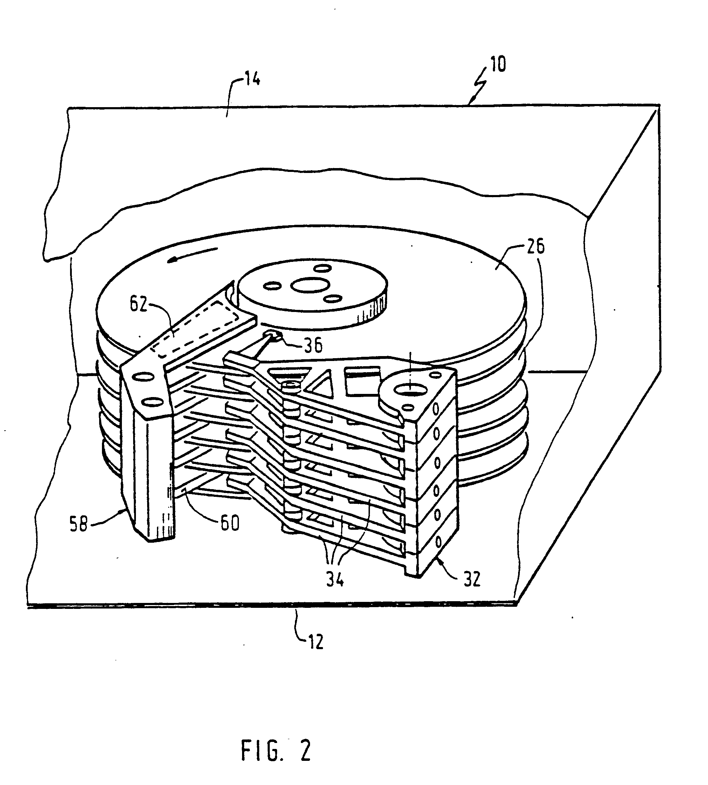

Wenn dem Plattenstapel ein Luftleitkamm zugeordnet ist, wie er weiter unten noch näher anhand der Fig. 2 beschrieben wird, können gemäß einem zweiten Ausführungsbeispiel die Löschköpfe auch an den zwischen die Magnetplatten eingreifenden Fingern oder Zinken des Luftleitkammes angeordnet sein.

Gemäß einem dritten Ausführungsbeispiel schließlich können die Löschköpfe auch unmittelbar an den Trägerarmen für die Schreib-/Leseköpfe neben diesen angeordnet sein. Dies hat den Vorteil, daß man keine eigene Trägeranordnung für die Löschköpfe benötigt, wenn diese wie beispielweise in Form des Luftleitkammes nicht ohnehin vorhanden ist.

Um auch im Falle eines Defektes des Magnetplattenantriebes eine Löschung zu ermöglichen, kann vorgesehen sein, daß die Magnetplatte manuell um mindestens 360° Grad drehbar ist. Dies kann mit Hilfe eines Schlüssels oder eines Werkzeuges erfolgen.

Um ein unbeabsichtigtes Löschen der auf den Platten gespeicherten Informationen zu verhindern, ist es zweckmäßig, wenn der Löscharm in seiner Ruhestellung verriegelbar ist. Bei einem elektromagnetischen Löschkopf kann der Einschaltmechanismus für den Löschkopf verriegelbar sein. Die Verriegelung kann dabei mit einem Schloß erfolgen, so daß nur der Besitzer des Schlüssels die Informationen mit Hilfe der zusätzlichen Löscheinrichtung löschen kann und damit die Kontrolle über den Löschvorgang behält. Um einer Fehlfunktion des Plattenlaufwerkes vorzubeugen, kann die Verriegelung der Löschköpfe mit der Stellvorrichtung für die Magnetköpfe derart gekoppelt sein, daß eine Entriegelung nur in Ruhestellung der Magnetköpfe möglich ist.

Neben der Möglichkeit, nun ohne die Verwendung der betriebsmäßigen Schreibe/Leseeinrichtung die gespeicherten Informationen unleserlich zu machen und damit dem Zugriff Unbefugter zu entziehen, bietet die erfindungsgemäße Lösung noch einen weiteren Vorteil. Wenn ein Plattenlaufwerk wegen eines Defektes ausgebaut werden muß, braucht es nicht unbedingt an den Benutzer zurückgegeben zu werden. Es wird sofort durch ein funktionsfähiges Plattenlaufwerk ersetzt. Das Serviceunternehmen braucht sich um die gespeicherten Informationen nicht zu kümmern und kann das reparierte Plattenlaufwerk im Bedarfsfalle ohne weiteres bei einem anderen Anwender einsetzen. Bisher wäre das nur möglich gewesen, wenn das Serviceunternehmen nach der Reparatur des defekten Plattenlaufwerkes die gespeicherten Informationen durch zeitaufwendiges Überschreiben unleserlich gemacht hätte.

Weitere Merkmale und Vorteile ergeben sich aus der folgenden Beschreibung, welche in Verbindung mit den beigefügten Zeichnungen die Erfindung anhand von Ausführungsbeispielen erläutert. Es zeigen:

Fig. 1 einen die Plattenachse enthaltenden schematischen Schnitt durch ein Festplattenlaufwerk gemäß der Erfindung,

Fig. 2 eine schematisch perspektivische Teildarstellung eines Festplattenlaufwerkes mit einem Luftleitkamm und

Fig. 3 eine schematische Draufsicht auf ein Festplattenlaufwerk mit Magnetköpfen und Löschköpfen an derselben Trägeranordnung.

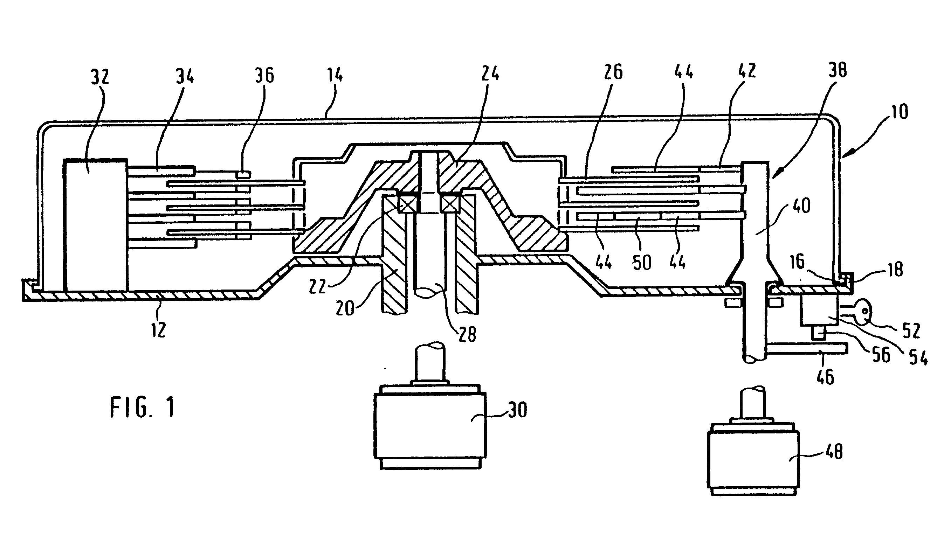

Das in der Fig. 1 dargestellte Festplattenlaufwerk umfaßt ein allgemein mit 10 bezeichnetes Gehäuse mit einem Gehäuseboden 12 und einer topfförmigen Gehäusekappe 14, die mit einem radial nach außen gerichteten Rand 16 eine ringförmige Klaue 18 des Gehäusebodens 12 untergreift, so daß das Gehäuse 10 staubdicht abgeschlossen ist.

In einem rohrförmigen Ansatz 20 des Gehäusebodens 12 ist mittels eines Lagers 22 ein Plattenträger 24 für Magnetplatten 26 drehbar gelagert, der über eine in dem Rohr 20 koaxial aus dem Gehäuse 10 herausgeführte Welle 28 mittels eines Elektromotors 30 antreibbar ist. Zwischen der Welle 28 und dem Elektromotor 30 ist eine nicht dargestellte Kupplung vorgesehen, so daß das Plattenlaufwerk als Ganzes von dem den Antriebsmotor 30 enthaltenden Gerät abnehmbar ist. Bei anderen Ausführungsformen eines Festplattenlaufwerkes kann der Antriebsmotor für den Plattenstapel 24, 26 auch in dem Gehäuse 10 eingebaut sein. Die in der Fig. 1 dargestellte Ausführungsform hat den Vorteil, daß der Plattenstapel nach dem Abheben des Festplattenlaufwerkes ohne Mühe von Hand gedreht werden kann.

In der Fig. 1 links von dem Plattenstapel 24, 26 ist eine Träger- und Stellvorrichtung 32 für Trägerarme 34 schematisch angedeutet, an denen die den Plattenoberflächen zugeordneten, als Schreib- und/oder Leseköpfe ausgebildeten Magnetköpfe 36 befestigt sind. Mit Hilfe der Stellvorrichtung 32 können diese Magnetköpfe 36 über die gesamte jeweilige Oberfläche geführt werden, um in bekannter Weise Informationen auf der jeweiligen Plattenoberfläche aufzuzeichnen oder zu lesen. Das soweit beschriebene Plattenlaufwerk ist an sich bekannt und braucht daher nicht näher erläutert zu werden.

Im Falle eines Defektes an den mechanischen Teilen und/ oder elektronischen Bauteilen des Festplattenlaufwerkes wird dieses in seiner Gesamtheit dem Hersteller oder einem Reparaturbetrieb zur Reparatur übergeben. Um in diesem Falle die auf den Magnetplatten 26 gespeicherten Informationen rasch und flächendeckend zu löschen oder unleserlich zu machen, ist in der in der Fig. 1 rechten Hälfte des Gehäuses 10 eine allgemein mit 38 bezeichnete Löschanordnung vorgesehen. Sie umfaßt eine in dem Gehäuseboden 12 gelagerte Welle 40, an der in den Plattenabständen entsprechenden axialen Abständen Löscharme 42 befestigt sind, die Permanentmagnete oder Elektromagnete 44 tragen. Die Welle 40 ist mit Hilfe eines außerhalb des Gehäuses 10 an ihr befestigten Hebels 46 manuell und/oder mit Hilfe eines Antriebsmotors 48 motorisch drehbar, wobei die Welle 40 mit der Welle des Antriebsmotors 48 ebenfalls durch eine nicht dargestellte Kupplung drehfest verbindbar ist. Die Welle 40 ist damit zwischen der in der Fig. 1 dargestellten Löschstellung, in welcher sich die Magnete 44 über die Plattenoberflächen erstrecken, und einer nicht dargestellten Ruhestellung verstellbar, in welcher die Löscharme 42 und die Magnete 44 aus dem Bereich der Platten herausgeschwenkt sind.

Grundsätzlich erstreckt sich der jeweilige Magnet 44 über den gesamten für die Speicherung von Informationen nutzbaren Plattenbereich, wie dies für den zwischen die beiden oberen Magnetplatten 26 eingeschwenkten mittleren Löscharm 42 der Fall ist. Wenn jedoch auf dem Plattenstapel bestimmte Informationen nicht gelöscht werden sollen, wie beispielsweise Serviceinformationen, die für den Test des Plattenlaufwerkes benötigt werden, so kann je nach der Art und Weise, wo und wie diese Informationen gespeichert sind, entweder ein Löscharm ganz entfallen, wie dies für die Unterseite der untersten Magnetplatte 26 dargestellt ist, oder der Magnet 44 erstreckt sich nur über einen Teilbereich der jeweiligen Magnetplatte 26, wie dies für den obersten und für den untersten Löscharm 42 dargestellt ist. Der an dem obersten Löscharm 42 angeordnete Magnet 44 erreicht den radial innersten Bereich der Magnetplattenoberfläche nicht. In diesem Bereich könnte eine mit der Löschanordnung 38 nicht löschbare Information gespeichert werden. An dieser Stelle kann sowohl ein Permanentmagnet als auch ein Elektromagnet Verwendung finden. An dem untersten Löscharm 42 sind zwei durch einen mittleren magnetfreien Bereich 50 getrennte Magnete 44 angeordnet, so daß in diesem Falle ein radial mittlerer Bereich der Magnetplattenoberfläche nicht gelöscht werden kann. In diesem Falle können jedoch nur Elektromagnete verwendet werden, da bei der Verwendung von Permanentmagneten der bezüglich der Welle 40 radial äußere Permanentmagnet 44 beim Einschwenken der Löscharme 42 zwischen die Magnetplatten 26 den gesamten Oberflächenbereich überstreichen würde.

An der Unterseite des Gehäusebodens 12 ist ein mit einem Schlüssel 52 betätigbares Schloß 54 schematisch dargestellt, dessen Riegel 56 in den Weg des Hebels 46 ragen kann, so daß die Löschanordnung 38 in ihrer Ruhestellung verriegelt werden kann. Zu diesem Zweck muß das Schloß 54 an sich um 90° Grad um die Welle 40 versetzt angeordnet sein. Die dargestellte Lage des Schlosses 54 wurde nur aus Erläuterungsgründen gewählt. Damit ist die Löschanordnung gegen eine unbeabsichtigte oder unbefugte Betätigung gesichert, so daß nur eine den Schlüssel besitzende befugte Person die auf den Magnetplatten 26 gespeicherten Informationen mit Hilfe der Löschanordnung 38 löschen kann.

Für den Fall, daß die Magnete 44 von Elektromagneten gebildet sind, kann eine entsprechende Verriegelungseinrichtung auch an der Einschaltvorrichtung für die Elektromagneten vorgesehen sein, so daß diese nur nach dem Entsperren des Schlosses 54 einschaltbar sind.

Es versteht sich, daß die in der Fig. 1 dargestellten unterschiedlichen Ausführungen der Magnete 44 nicht alle bei ein und demselben Plattenlaufwerk vorhanden sein müssen, sondern lediglich aus Erläuterungsgründen in derselben Figur dargestellt wurden.

Bei der in Fig. 2 dargestellten Ausführungsform sind gleiche Teile mit den gleichen Bezugszeichen wie in Fig. 1 bezeichnet. Im Unterschied zu der Ausführungsform gemäß Fig. 1 ist bei der Ausführungsform gemäß Fig. 2 ein stationärer Luftleitkamm 58 in Drehrichtung vor den Magnetköpfen 36 angeordnet, dessen Kammfinger 60 oder -zinken sich radial nach innen zwischen die Magnetplatten 26 hinein erstrecken. Der Luftleitkamm 58 hat die Aufgabe, die vom rotierenden Plattenstapel mitgerissene Luft in Richtung auf ein Filter abzulenken und dadurch zu verhindern, daß Staub-und Abriebpartikel an die empfindlichen Magnetköpfe 36 gelangen. Die Kammfinger 60 können nun in vorteilhafter Weise zur Halterung von aktivierbaren Löschspulen 62 dienen, wie dies in Fig. 2 schematisch angedeutet ist, wobei im vorliegenden Fall die Löschspule in den Kammfinger 60 eingebettet ist. Die Löschspulen können auch auf den Kammfingern angeordnet sein. In diesem Fall kann also eine eigene Halterung für die Löschköpfe entfallen.

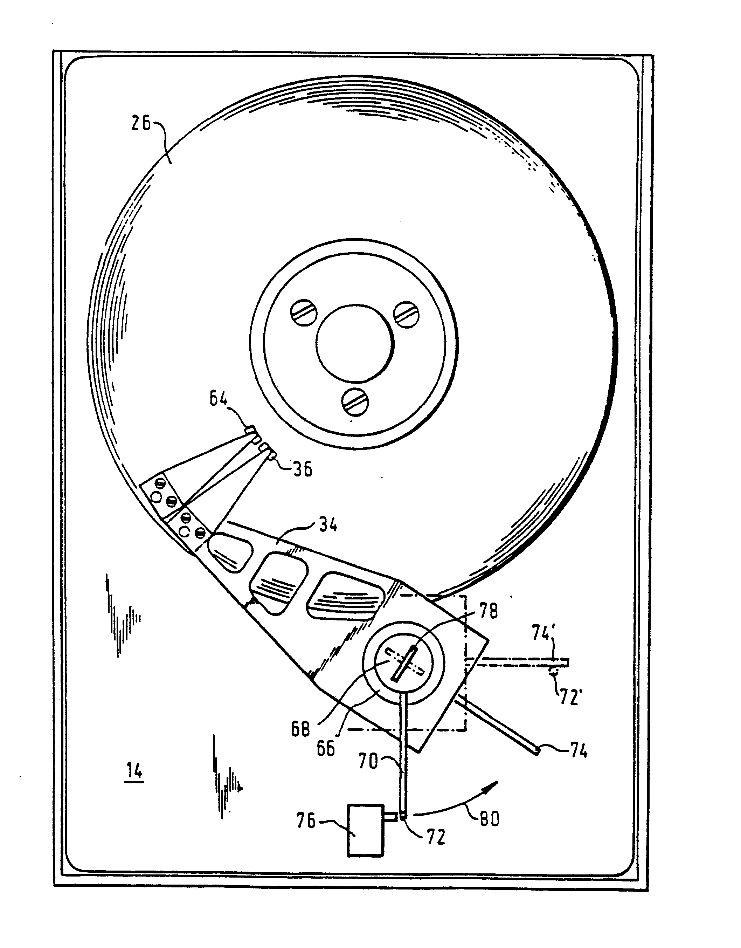

Ein drittes Ausführungsbeispiel des erfindungsgemäßen Festplattenlaufwerkes ist schließlich in Fig. 3 dargestellt. Auch hier werden gleiche Teile mit gleichen Bezugszeichen wie in den vorhergehenden Ausführungsbeispielen bezeichnet. In Laufrichtung der Magnetplatte 26 hinter dem Magnetkopf 36 ist ein elektromagnetischer Löschkopf 64 an dem Trägerarm 34 angeordnet. In der Gehäusekappe 14 ist oberhalb einer Schwenkwelle 66 des Trägerarms 34 eine Welle 68 drehbar gelagert. An dieser wiederum ist ein Betätigungsarm 70 befestigt, dessen schwenkachsenfernes Ende 72 rechtwinklig nach unten, das heißt vom Betrachter der Fig. 3 weg, abgebogen ist. Ein an dem dem Magnetkopf 36 fernen Ende des Trägerarmes 34 befestigter Mitnehmerstift 74 ist so angeordnet, daß das Betätigungsarmende 72 mit ihm in Berührung tritt, wenn es in Richtung des Pfeiles 80 verschwenkt wird.

In seiner Ruhestellung betätigt der Betätigungsarm 70 einen Mikroschalter 76, der den Löschkopf 64 stromlos hält. Wird nun der Betätigungsarm 70 mittels eines Schlüssels 78 oder dergleichen aus seiner Ruhestellung in Richtung des Pfeiles 80 verschwenkt, so wird der Löschkopf 64 über den Mikroschalter 76 bestromt, und das Betätigungsarmende 72 schlägt an dem Mitnehmerstift 74 an. Durch Weiterdrehen des Schlüssels 78 wird der Trägerarm 34 und mit ihm der bestromte Löschkopf 64 über den gesamten Plattenbereich geschwenkt, in dem somit die gespeicherten Informationen gelöscht werden. Die äußere Endstellung der Anordnung ist strichpunktiert dargestellt. Wird der Schlüssel 78 wieder in seine Ausgangslage zurückgedreht, so schwingt der Trägerarm 34, angetrieben durch eine an sich bekannte und deshalb nicht näher dargestellte Rückstellfeder, in die durchgezogen dargestellte Ruhestellung zurück. Bei dem vorstehend beschriebenen Ausführungsbeispiel mit einem elektromagnetischen Löschkopf ist also der Einschaltmechanismus für den Löschkopf verriegelbar. Eine derartige Verriegelung kann selbstverständlich auch bei dem Ausführungsbeispiel gemäß Fig. 2 vorgesehen sein.

**Patentansprüche**

1. Festplattenlaufwerk umfassend ein staubdicht abgeschlossenes Gehäuse (10) und in diesem mindestens eine Magnetplatte (26), die mit einem Plattenantrieb (30) verbunden ist, eine Trägeranordnung (34) für mindestens einen relativ zur Magnetplatte (26) verstellbaren elektromagnetischen Schreib/Lesekopf (36) und einen Positionierantrieb (32) zum Verstellen des Schreib-/Lesekopfes (36) parallel zur Plattebene, wobei das Festplattenlaufwerk von einer den Schreib-/Lesekopf (36) und den Positionierantrieb (32) steuernden Steuereinrichtung trennbar ist, dadurch gekennzeichnet, daß in dem Gehäuse (10) mindestens ein permanent- oder elektromagnetischer Löschkopf (64) derart angeordnet und betätigbar ist, daß er unabhängig von dem Schreib-/Lesekopf (36) auch dann betätigbar ist, wenn dieser aufgrund einer Störung und/oder einer elektrischen Trennung von der Steuereinrichtung nicht benutzbar ist.

2. Festplattenlaufwerk nach Anspruch 1, dadurch gekennzeichnet, daß der Löschkopf (44) an einem relativ zur Magnetplatte (26) verstellbaren Löscharm (42) angeordnet ist.

3. Festplattenlaufwerk nach Anspruch 2, dadurch gekennzeichnet, daß der Löscharm (42) am Gehäuse (10) um eine parallel zur Magnetplattenachse gerichtete Schwenkachse schwenkbar gelagert ist.

4. Festplattenlaufwerk nach Anspruch 2 oder 3, dadurch gekennzeichnet, daß der Löscharm (42) manuell verstellbar ist.

5. Festplattenlaufwerk nach Anspruch 2 oder 3, dadurch gekennzeichnet, daß der Löscharm motorisch verstellbar ist.

6. Festplattenlaufwerk nach einem der Ansprüche 2 bis 5, dadurch gekennzeichnet, daß bei einem Laufwerk mit einem eine Mehrzahl von Magnetplatten (26) umfassenden Plattenstapel die Löschköpfe (44) zwischen die Magnetplatten (26) einschwenkbar sind.

7. Festplattenlaufwerk nach einem der Ansprüche 1 bis 6, dadurch gekennzeichnet, daß der Löscharm (42) in seiner Ruhestellung verriegelbar ist.

8. Festplattenlaufwerk nach Anspruch 1, dadurch gekennzeichnet, daß der Löschkopf (64) an der Trägeranordnung (34) für den Schreib-/Lesekopf (36) angeordnet ist.

9. Festplattenlaufwerk nach Anspruch 1, dadurch gekennzeichnet, daß in Drehrichtung der Magnetplatten (26) vor dem Schreib-/Lesekopf (36) ein stationärer Luftleitkamm angeordnet ist, der sich mit seinen Kammfingern zwischen die Magnetplatten erstreckt, die Löschköpfe (62) an den Kammfingern (60) des Luftleitkammes (58) angeordnet sind.

10. Festplattenlaufwerk nach Anspruch 9, dadurch gekennzeichnet, daß die Löschköpfe (62) in die Kammfinger eingebettet sind.

11. Festplattenlaufwerk nach einem der Ansprüche 1 bis 10, dadurch gekennzeichnet, daß bei einer Mehrzahl von Magnetplatten (26) nur einem Teil der Plattenoberflächen jeweils ein Löschkopf (44, 62) zugeordnet ist.

12. Festplattenlaufwerk nach einem der Ansprüche 1 bis 11, dadurch gekennzeichnet, daß sich der Löschkopf (44, 64) in seiner Löschstellung nur über einen Teil der Magnetplattenoberfläche erstreckt.

13. Festplattenlaufwerk nach einem der Ansprüche 1 bis 12, dadurch gekennzeichnet, daß die Magnetplatte (26) bzw. der Magnetplattenstapel manuell um mindestens 360° Grad drehbar ist.

14. Festplattenlaufwerk nach einem der Ansprüche 1 bis 13, dadurch gekennzeichnet, daß bei einem elektromagnetischen Löschkopf (44, 62, 64) der Einschaltmechanismus für den Löschkopf (44, 62, 64) verriegelbar ist.

15. Festplattenlaufwerk nach Anspruch 7 oder 14, soweit dieser auf einen der Ansprüche 1 bis 7 und 9 bis 13 zurückbezogen ist, dadurch gekennzeichnet, daß die Verriegelung mit der Stellvorrichtung (32) für die Magnetköpfe (36) derart gekoppelt ist, daß eine Entriegelung nur in der Ruhestellung der Magnetköpfe (36) möglich ist.

## Claims

1. Hard disk drive comprising a dustproof closed housing (10) and within the latter at least one magnetic disk (26) connected to a disk drive (30), carrier means (34) or at least one electromagnetic write/read head (36) movable relative to the magnetic disk (26) and a positioning drive (32) for moving the write/read head (36) parallel to the disk plane, the hard disk drive being separable from a control device controlling the write/read head (36) and the positioning drive (32), characterized in that at least one permanent magnet or electromagnetic erase head (64) is arranged in the housing (10) and operable such that it can be operated independently of the write/read head (36) even when the latter is not usable due to a fault and/or an electrical separation from the control device.

2. Hard disk drive as claimed in Claim 1, characterized in that the erase head (44) is arranged on an erase arm (42) which is movable relative to the magnetic disk (26).

3. Hard disk drive as claimed in Claim 2, characterized in that the erase arm (42) is pivoted on the housing (10) around a pivoting axis aligned parallel to the magnetic disk axis.

4. Hard disk drive as claimed in Claim 2 or 3, characterized in that the erase arm (42) is manually movable.

5. Hard disk drive as claimed in Claim 2 or 3, characterized in that the erase arm is movable by motor drive.

6. Hard disk drive as claimed in one of claims 2 to 5, characterized in that in a disk drive with a disk pack including a plurality of magnetic disks (26) the erase heads (44) can be swung in between the magnetic disks (26).

7. Hard disk drive as claimed in one of Claims 1 to 6, characterized in that the erase arm (42) is lockable in its rest position.

8. Hard disk drive as claimed in Claim 1, characterized in that the erase head (64) is arranged on the carrier means (34) for the write/read head (36).

9. Hard disk drive as claimed in Claim 1, characterized in that a stationary air conduction comb is arranged in front of the write/read head (36) in the direction of rotation of the magnetic disks (26), which comb extends by its comb fingers between the magnetic disks, and in that the erase heads (62) are arranged on the comb fingers (60) of the air conduction comb (58).

10. Hard disk drive as claimed in Claim 9, characterized in that the erase heads (62) are embedded in the comb fingers.

11. Hard disk drive as claimed in one of Claims 1 to 10, characterized in that for a plurality of magnetic disks (26) only a part of the disk surfaces is respectively assigned to one erase head (44, 62).

12. Hard disk drive as claimed in one of Claims 1 to 11, characterized in that the erase head (44, 64) in its erase position extends over only a part of the magnetic disk surface.

13. Magnetic disk drive as claimed in one of Claims 1 to 12, characterized in that the magnetic disk (26) or the magnetic disk pack is manually rotatable by at least 360°.

14. Hard disk drive as claimed in one of Claims 1 to 13, characterized in that with an electromagnetic erase head (44, 62, 64) the switching-on mechanism for the erase head (44, 62, 64) is lockable.

15. Hard disk drive as claimed in Claim 7 or 14, as far as this claim is dependent on one of the claims 1 to 7 and 9 to 13, characterized in that the locking is coupled with the driving device (32) for the magnetic heads (36) in such a way that unlocking is possible only in the rest position of the magnetic heads (36).

## Revendications

1. Mécanisme d'entraînement à disques fixes, comprenant un carter (10) fermé hermétiquement à la poussière et, inclus dans ce dernier, au moins un disque magnétique (26) qui est relié à un mécanisme d'entraînement de disque (30), un agencement porteur (34) pour au moins une tête électromagnétique d'écriture et de lecture (36) déplaçable par rapport au disque magnétique (26) et un mécanisme de manoeuvre (32) pour le déplacement de la tête d'écriture et de lecture (36) parallèlement au plan du disque, le mécanisme d'entraînement à disques fixes étant séparable d'un dispositif de commande commandant la tête d'écriture et de lecture (36) et le mécanisme de manoeuvre (32), caractérisé en ce que dans le carter (10) est disposée et peut être actionnée au moins une tête d'effacement électromagnétique ou à aimantation permanente (64) de telle sorte qu'elle est actionnable indépendamment de la tête d'écriture et de lecture (36), même lorsque celle-ci n'est pas utilisable par le dispositif de commande en raison d'un dérangement et/ou d'une coupure électrique.

2. Mécanisme selon la revendication 1 caractérisé en ce que la tête d'effacement (44) est montée sur un bras d'effacement (42) déplaçable par rapport au disque magnétique (26).

3. Mécanisme selon la revendication 2 caractérisé en ce que le bras d'effacement (42) est monté dans le carter (10) pour pivoter autour d'un axe de pivotement parallèle à l'axe du disque magnétique.

4. Mécanisme selon la revendication 2 ou 3, caractérisé en ce que le bras d'effacement (42) est déplaçable manuellement.

5. Mécanisme selon la revendication 2 ou 3, caractérisé en ce que le bras d'effacement est déplaçable par un moteur.

6. Mécanisme selon l'une des revendications 2 à 5 caractérisé en ce que, avec un mécanisme d'entraînement à empilement de disques comprenant une pluralité de disques magnétiques (26), les têtes d'effacement (44) peuvent être introduites par pivotement entre les disques magnétiques (26).

7. Mécanisme selon l'une des revendications 1 à 6 caractérisé en ce que le bras d'effacement (42) peut être verrouillé à sa position de repos.

8. Mécanisme selon la revendication 1, caractérisé en ce que la tête d'effacement (64) est disposée sur l'agencement porteur (34) de la tête d'écriture et de lecture (36).

9. Mécanisme selon la revendication 1 caractérisé en ce qu'un peigne stationnaire de guidage d'air est disposé avant la tête d'écriture et de lecture (36) dans le sens de rotation des disques magnétiques (26), ce peigne s'étendant par ses dents entre les disques magnétiques, et les têtes d'effacement (62) sont disposées sur les dents (60) du peigne de guidage d'air (58).

10. Mécanisme selon la revendication 9 caractérisé en ce que les têtes d'effacement (62) sont noyées dans les dents du peigne.

11. Mécanisme selon l'une des revendications 1 à 10, caractérisé en ce que, dans le cas d'une pluralité de disques magnétiques (26), une tête d'effacement (44, 62) est rattachée respectivement à une partie seulement des faces supérieures des disques.

12. Mécanisme selon l'une des revendications 1 à 11 caractérisé en ce que la tête d'effacement (44, 64) s'étend, à sa position d'effacement, sur une partie seulement de la face supérieure des disques magnétiques.

13. Mécanisme selon l'une des revendications 1 à 12, caractérisé en ce que le disque magnétique (26) ou l'empilement de disques magnétiques peut être tourné manuellement de 360° au moins.

14. Mécanisme selon l'une des revendications 1 à 13 caractérisé en ce que, dans le cas d'une tête d'effacement électromagnétique (44, 62, 64), le mécanisme de mise en service de la tête d'effacement (44, 62, 64) est verrouillable.

15. Mécanisme selon la revendication 7 ou 14, dans la mesure où elle est rattachée à l'une des revendications 1 à 7 et 9 à 13, caractérisé en ce que le verrouillage est couplé avec le dispositif (32) de manoeuvre des têtes magnétiques (36) de telle sorte qu'un déverrouillage n'est possible qu'à la position de repos des têtes magnétiques (36).

FIG. 1

0 140 193

FIG. 2

FIG. 3